# FASCICULE DE BREVET EUROPEEN

(11) **EP 2 618 996 B1**
(45) Date de publication et mention de la délivrance du brevet: **11.06.2014**
(21) Numéro de dépôt: 11761497.4
(22) Date de dépôt: 18.08.2011
(51) Int. Cl.: B31B 1/74

(54) **PROCEDE DE CONTROLE QUALITE POUR UNE MACHINE POUR LA FABRICATION D'EMBALLAGES**
QUALITÄTSKONTROLLVERFAHREN ZUR VERWENDUNG BEI EINER MASCHINE ZUR HERSTELLUNG VON PACKUNGEN
QUALITY CONTROL METHOD FOR USE ON A MACHINE FOR MANUFACTURING PACKAGING

(30) Priorité: 22.09.2010 EP 10010139
(43) Date de publication de la demande: 31.07.2013
(73) Titulaire: BOBST MEX SA, CH-1031 Mex (CH)
(72) Inventeur: BELLINO, Mario, 1350 Orbe (CH)
(74) Mandataire: Poirier, Jean-Michel Serge
(86) Numéro de dépôt international: PCT/EP2011/004151
(87) Numéro de publication internationale: WO 2012/038010

(56) Documents cités:
- WO-A1-01/87582
- GB-A- 2 424 416

## Description

La présente invention concerne un procédé de contrôle qualité pour une machine pour la fabrication d'emballages.

Il existe différents types de machines de traitement pour la fabrication d'emballages : par exemple certaines de ces machines traitent des bandes, en les imprimant, puis en les découpant en poses. D'autres traitent des feuilles en les imprimant y compris éventuellement par estampage, d'autres encore transforment des feuilles imprimées en les découpant en poses. Enfin certaines machines ont pour fonction de plier et de coller des poses. Les matériaux composant les bandes ou les feuilles peuvent être du papier ou du carton, voire un matériau plastique.

Il existe des systèmes de contrôle qualité qui permettent de détecter la présence de défauts sur tous les objets transformés par une machine, qu'il s'agisse de feuilles ou de poses. Voir par exemple le document WO 01/87582. Selon le type de machine, le contrôle peut être effectué au cours du processus de transformation, par exemple après un processus d'impression mais avant un processus de découpe effectué dans la même machine ; ou bien à la fin du processus de transformation, par exemple dans le cas de machines qui ne font qu'imprimer des feuilles sans les découper, comme les machines spécialisées pour l'estampage et la dépose de métallisation ; ou bien en entrée de machine, par exemple pour vérifier la qualité des poses en entrée d'une plieuse-colleuse. Le plus souvent la présence d'un défaut aboutit à l'éjection de l'objet non-conforme.

Les systèmes qualités existants sont basés sur un procédé consistant à acquérir une image de référence puis d'acquérir, pour chaque objet dont on veut contrôler la qualité, une image que l'on compare avec l'image de référence. Des programmes de traitement d'images classiques permettent de faire cette comparaison et de détecter alors les défauts.

La surface utile à contrôler peut varier selon le type d'objet contrôlé, feuille ou pose. Par exemple dans le cas d'une feuille imprimée qui sera ultérieurement découpée en plusieurs poses, un défaut pourrait être détecté sur une partie de la feuille qui ne sera pas une pose, mais un déchet. La présence d'un tel défaut de devrait pas aboutir au rejet de l'objet contrôlé puisque le défaut ne sera finalement plus présent sur l'emballage.

Pour éviter de détecter des défauts dans des zones non pertinentes, certains procédés de contrôle qualité comprennent une étape de définition de zones masquées. Avant de pouvoir lancer un travail de transformation sur la machine, l'utilisateur de la machine définit manuellement des zones non pertinentes, dites zones masquées, en utilisant l'image de référence. Ces zones sont le plus souvent des formes géométriques de base par exemple des polygones ou des ellipses. Une fois la totalité des zones masquées définie manuellement, l'ensemble est sauvegardé soit sous la forme d'un modèle qui définit uniquement la géométrie de toutes les zones masquées et leur positionnement dans l'image, soit sous la forme d'un fichier dit de travail qui comprend non seulement le modèle, mais également tous les paramètres nécessaires pour effectuer le contrôle qualité. Par exemple le fichier de travail pourra comprendre l'image de référence, les données sur la luminosité de l'éclairage, ou celles sur la sensibilité de la caméra.

Dans les procédés de contrôle qualité existants, cette étape de définition des zones masquées est effectuée directement sur la machine.

Une fois effectuée la phase de définition des zones masquées, l'utilisateur peut procéder à la transformation d'un lot d'objets, en effectuant un contrôle qualité sur chacun d'entre eux sans que des défauts soient détectés sur des zones non pertinentes, puisque ces zones ont été définies comme des zones masquées. Lorsqu'il voudra procéder à la transformation ultérieure d'un autre lot composé des mêmes éléments, il n'aura pas à refaire la phase de définition des zones masquées : il lui suffira d'utiliser le fichier de travail, ou au moins le modèle définit précédemment.

Néanmoins la définition d'un nouveau travail est longue et fastidieuse. Le problème technique résolu par l'invention est donc de faciliter et de réduire le temps de définition d'un nouveau travail.

La solution au problème technique posé consiste, en ce que le procédé de contrôle qualité comprend les phases et étapes définies par la revendication 1.

Des modes de réalisation particulièrement avantageux sont définis par les revendications dépendantes 2 à 4.

La présente invention concerne également les caractéristiques qui ressortiront au cours de la description qui va suivre, et qui devront être considérées isolément ou selon toutes leurs combinaisons techniques possibles.

Cette description, donnée à titre d'exemple non limitatif, est destinée à mieux faire comprendre en quoi consiste l'invention et comment elle peut être réalisée. Elle est donnée en référence aux dessins annexés dans lesquels:
La figure 1 illustre le calque de découpe et de refoulage d'un fichier prépresse
La figure 2 montre le calque après une sélection automatique d'une zone extérieure

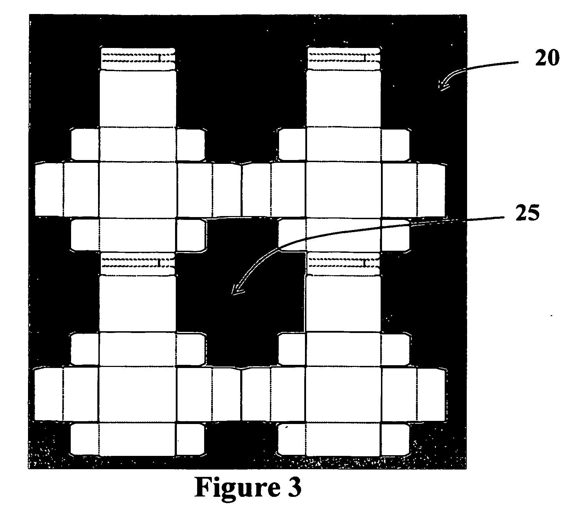

La figure 3 montre le calque après une sélection manuelle d'une zone fermée

Tout créateur d'emballages utilise des outils informatiques permettant de définir les images qui seront imprimées à la surface de l'emballage, les zones qui seront estampées ou gaufrées, ou qui subiront un traitement particulier. Ces outils permettent également de définir les lignes de découpe ; et les lignes de refoulage qui serviront lors des pliages. Le résultat est ce que l'on appelle communément un fichier prépresse. Ces fichiers existent sous différents formats, par exemple le PDF, le JDF ou le TIFF et ont la particularité de comprendre différents calques : le plus souvent au moins un calque par transformation nécessaire pour produire l'emballage. Ainsi il y aura un calque par couleur, un calque pour l'estampage, un calque pour la découpe et le refoulage, et caetera ...

Ce fichier est ensuite utilisé par les différents fabricants d'outils et de clichés d'impression pour les différentes machines qui seront utilisées successivement lors de la production de cet emballage.

Selon l'invention le fichier prépresse ne sera pas seulement utilisé pour la définition des outils comme jusqu'à présent, mais également lors des procédés de contrôle qualité sur les différentes machines.

Dans une étape d'un procédé contrôle qualité selon l'invention, outre les étapes déjà présentes dans les procédés de contrôle qualité existants, on procède à une mise en correspondance entre l'image de référence, et l'image correspondante définie par le fichier prépresse de l'emballage correspondant. Par exemple, si le contrôle qualité est effectué après une série d'impression de quatre couleurs, la mise en correspondance se fera entre l'image de référence de l'objet et la combinaison des quatre calques correspondants aux quatre couleurs dans le fichier prépresse de l'emballage considéré.

Cette mise en correspondance permet de définir une mise à l'échelle des données du fichier prépresse, leurs positionnements voire leur orientation, par rapport à l'image de référence et aux images acquises lors de la phase de contrôle qualité d'un lot d'objets plats. Elle est entièrement automatique.

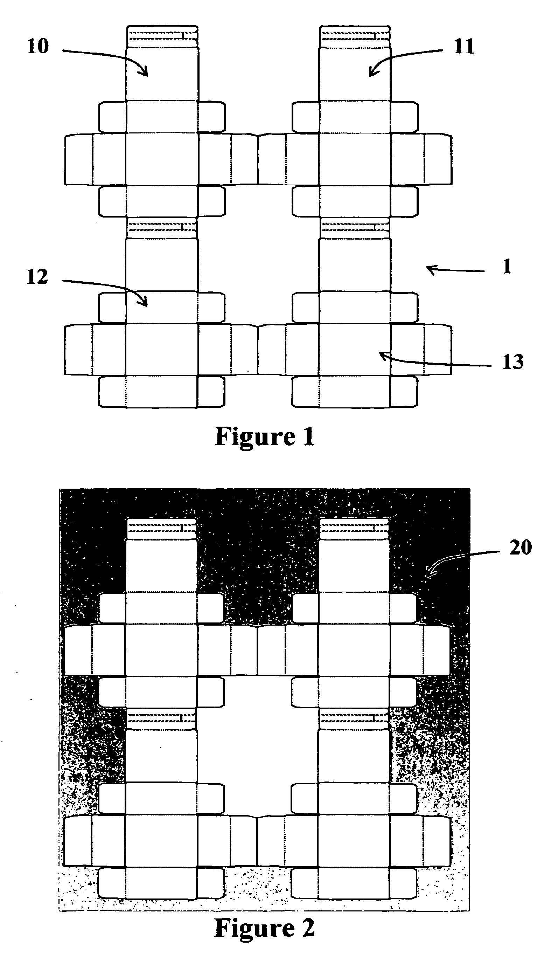

Dans une autre étape d'un procédé contrôle qualité selon l'invention, indépendante de l'étape de mise en correspondance, le calque de refoulage et de découpe est extrait des données prépresse. Il s'agit du calque qui correspond à la transformation de découpe et de refoulage fréquemment effectuée dans une presse à platine. La Figure 1 représente un exemple de calque de découpe et de refoulage (1). Ce calque (1) représente une feuille qui sera découpée en quatre poses identiques (10, 11, 12, 13). Une étape suivante d'analyse du calque permet d'identifier automatiquement toutes les zones fermées contenues dans le calque, ainsi que la zone externe du calque.

Puis toute la zone externe (20) est automatiquement définie comme correspondant à une zone masquée. Le bord intérieur de cette zone (20) peut être extrêmement complexe, comme dans l'exemple représenté à la Figure 2, qui correspond au calque (1) de la Figure 1. Cette définition automatique permet de gagner un temps précieux par rapport à une définition manuelle à partir de l'image de référence.

Dans une étape suivante, l'utilisateur peut sélectionner manuellement les zones fermées qui correspondront à des zones masquées. Ici aussi le contour de la zone peut être très complexe, et sa sélection extrêmement rapide par rapport au travail de définition manuel. Dans l'exemple du calque (1) de la Figure 1, l'objet est une feuille qui sera découpée en quatre poses (10, 11, 12, 13) qui se touchent. Par conséquent, entre les quatre poses se trouve une zone centrale fermée (25) qui correspond à un déchet qui sera produit lors de la découpe des poses. Par un simple clic de souris, l'utilisateur peut définir cette zone centrale fermée (25) comme correspondant à une zone masquée. La aussi le gain de temps est appréciable par rapport à une définition manuelle de la zone masquée à partir de l'image de référence.

Ensuite les zones masquées sont obtenues à partir des zones identifiées (20, 25) soit automatiquement dans le cas de la zone extérieure (20), soit manuellement dans le cas de zones fermées du calque sélectionnées par l'utilisateur (25), et des données d'échelle et de positionnement relatif obtenues lors de la phase de correspondance.

Ainsi, grâce aux données calculées lors de la phase de correspondance, il est facile de passer de zones définies à partir du fichier prépresse de découpe et de refoulage à des zones correspondantes dans l'image de référence et dans les images des objets plats acquises lors de la phase de contrôle qualité d'un lot d'objets traité par la machine.

Cette nouvelle façon de définir des zones masquées peut optionnellement être combinée avec une définition manuelle de zones masquées soit directement sur l'image de référence comme dans les procédés connus, soit à partir des calques d'impression du fichier prépresse. Dans ce second cas, il faudra utiliser les données de mise à l'échelle et de positionnement calculées lors de la phase de mise en correspondance, afin de faire correspondre les zones définies grâce au fichier prépresse avec les zones des images acquises.

Avantageusement, outre des zones masquées, le procédé permet de définir des zones d'alerte. Ces zones permettent de prendre en compte différemment les défauts qu'elles contiennent.

Par exemple il peut être souhaitable de comptabiliser les défauts d'impression qui apparaissent dans des zones d'alerte et qui, au final, ne seront pas visibles sur l'emballage. Même si l'objet ne doit pas être éjecté, le défaut indique que l'impression n'est pas parfaite et peut nécessiter une intervention de maintenance ou de réglage.

Les différentes phases et étapes d'un procédé selon l'invention peuvent être effectuées dans la machine ; dans un dispositif additionnel de contrôle qualité. Certaines étapes peuvent être réalisées dans un ordinateur distant, en particulier toutes les phases qui concernent le traitement du fichier prépresse, l'analyse des calques d'impression et de découpe et de refoulage, ou la définition de zones à partir de ces calques.

## Revendications

1. Procédé de contrôle qualité pour une machine de traitement d'objets plats pour la fabrication d'un emballage, comprenant :
- une phase de définition d'un travail comprenant :
- une étape d'acquisition d'une image de référence d'un objet plat,
- une étape de définition de zones masquées et de zones non masquées, puis
- une phase de contrôle de la qualité d'un lot d'objets plats, comprenant pour chaque objet plat contrôlé :
- une étape d'acquisition d'image de la surface de l'objet plat contrôlé,
- une étape de détermination de la présence de défauts en fonction du résultat de la comparaison de l'image acquise avec l'image de référence,
- la prise en compte uniquement des défauts se trouvant dans une zone non masquée,
**caractérisé en ce que**
- ladite phase de définition d'un travail comprend également :
- une étape de réception du fichier prépresse de l'emballage, antérieure à l'étape de définition des zones masquées et non masquées, puis
- une étape de mise en correspondance de l'image référence avec les calques d'impression du fichier prépresse, déterminant des facteurs d'échelle et des positionnements relatifs,
et **en ce que**
- ladite étape de définition de zones masquées et de zones non masquées comprend également :
- une étape d'extraction du calque de refoulage et de découpe (10) à partir du fichier prépresse, puis
- une étape d'analyse du calque de refoulage et de découpe identifiant toutes les zones fermées du calque ainsi qu'une zone extérieure du calque, puis
- la définition automatique d'une zone masquée à partir de la zone extérieure (20) du calque (1), des facteurs d'échelle et des positionnements relatifs, et
- la définition manuelle de zones masquées à partir de la sélection manuelles de zones fermées (25) du calque de refoulage et de découpe (1), des facteurs d'échelle et des positionnements relatifs.

2. Procédé de contrôle qualité selon la revendication 1, **caractérisé en ce que** l'étape de définition de zones masquées et de zones non masquées comprend également une étape de définition manuelle de zones masquées à partir de l'image de référence.

3. Procédé de contrôle qualité selon la revendication 1, **caractérisé en ce que** l'étape de définition de zones masquées et de zones non masquées comprend également une étape de définition manuelle de zones masquées à partir des calques d'impression du fichier prépresse, des facteurs d'échelle et des positionnements relatifs.

4. Procédé de contrôle qualité selon l'une des revendications précédentes, **caractérisé en ce que** l' étape de définition de zones masquées permet également de définir des zones d'alerte, et **en ce qu'**il comprend une prise en compte différente des défauts identifiés dans une zone d'alerte.

## Patentansprüche

1. Qualitätskontrollverfahren für eine Maschine zur Bearbeitung flacher Gegenstände zur Herstellung einer Verpackung, umfassend:
- eine Phase der Definition einer Arbeit, umfassend:
- einen Schritt der Erfassung eines Referenzbildes eines flachen Gegenstandes,
- einen Schritt der Definition von verdecken Zonen und nicht verdeckten Zonen, dann
- eine Phase der Kontrolle der Qualität eines Satzes von flachen Gegenstände, umfassend für jeden kontrollierten flachen Gegenstand:
- einen Schritt der Erfassung eines Bildes von der Oberfläche des kontrollierten flachen Gegenstandes,
- einen Schritt der Bestimmung des Vorhandenseins von Fehlern in Abhängigkeit vom Ergebnis des Vergleichs des erfassten Bildes mit dem Referenzbild,
- die Berücksichtigung nur der Fehler, die sich in einer nicht verdeckten Zone befinden,
**dadurch gekennzeichnet, dass**
- die Phase der Definition einer Arbeit ebenfalls umfasst:
- einen Schritt des Erhalts der Druckvorstufendatei der Verpackung vor dem Schritt der Definition der verdeckten und nicht verdeckten Zonen, dann
- einen Schritt der Übereinstimmung des Referenzbildes mit den Druckpausen der Druckvorstufendatei, der Maßstabfaktoren und relative Positionierungen bestimmt,
und dass
- der Schritt der Definition von verdecken Zonen und nicht verdeckten Zonen ebenfalls umfasst:
- einen Schritt der Entnahme der Stauch- und Schnittpause (10) aus der Druckvorstufendatei, dann
- einen Schritt der Analyse der Stauch- und Schnittpause, der alle geschlossenen Zonen der Pause sowie eine äußere Zone der Pause identifiziert, dann
- die automatische Definition einer verdeckten Zone anhand der äußeren Zone (20) der Pause (1), der Maßstabfaktoren und der relativen Positionierungen, und
- die manuelle Definition von verdeckten Zonen anhand der manuellen Auswahl von geschlossenen Zonen (25) der Stauch- und Schnittpause (1), der Maßstabfaktoren und der relativen Positionierungen.

2. Qualitätskontrollverfahren nach Anspruch 1, **dadurch gekennzeichnet, dass** der Schritt der Definition von verdeckten Zonen und von nicht verdeckten Zonen auch einen Schritt der manuellen Definition von verdeckten Zonen anhand des Referenzbildes umfasst.

3. Qualitätskontrollverfahren nach Anspruch 1, **dadurch gekennzeichnet, dass** der Schritt der Definition von verdeckten Zonen und von nicht verdeckten Zonen auch einen Schritt der manuellen Definition von verdeckten Zonen anhand der Druckpausen der Druckvorstufendatei, der Maßstabfaktoren und der relativen Positionierungen umfasst.

4. Qualitätskontrollverfahren nach einem der vorhergehenden Ansprüche, **dadurch gekennzeichnet, dass** der Schritt der Definition von verdeckten Zonen es auch ermöglicht, Alarmzonen zu definieren, und dass er eine unterschiedliche Berücksichtigung der in einer Alarmzone identifizierten Fehler umfasst.

## Claims

1. Quality control method for a machine for processing flat objects for producing packaging, comprising:
- a phase of defining a job of work, comprising:
- a step of acquiring a reference image of a flat object,
- a step of defining masked zones and unmasked zones, then
- a phase of quality control of a set of flat objects comprising, for each flat object quality-controlled:
- a step of acquiring an image of the surface of the quality-controlled flat object,
- a step of determining the presence of defects as a function of the result of a comparison between the acquired image and the reference image,
- giving consideration only to those defects that lie in an unmasked zone,
**characterized in that**
- said phase of defining a job of work also comprises:
- a step of receiving the prepress file of the packaging, prior to the step of defining the masked and unmasked zones, then
- a step of mapping the reference image with the print blueprint of the prepress file, determining scaling factors and relative positions,
and **in that**
- said step of defining masked zones and unmasked zones also comprises:
- a step of extracting the scoring and cutting blueprint (10) from the prepress file, then
- a step of analyzing the scoring and cutting blueprint to identify all the closed zones of the blueprint and an exterior zone of the blueprint, then
- automatic definition of a masked zone on the basis of the exterior zone (20) of the blueprint (1), of the scaling factors and of the relative positions, and
- manual definition of masked zones on the basis of the manual selection of closed zones (25) of the scoring and cutting blueprint (1), the scaling factors and the relative positions.

2. Quality control method according to claim 1, **characterized in that** the step of defining masked zones and unmasked zones also comprises a step of manually defining masked zones on the basis of the reference image.

3. Quality control method according to claim 1, **characterized in that** the step of defining masked zones and unmasked zones also comprises a step of manually defining masked zones on the basis of the print blueprint from the prepress file, the scaling factors and the relative positions.

4. Quality control method according to one of the preceding claims, **characterized in that** the step of defining masked zones also allows the definition of warning zones, and **in that** it includes different consideration of the defects identified in a warning zone.
